# EUROPEAN PATENT SPECIFICATION

(11) **EP 2 546 910 B1**
(45) Date of publication and mention of the grant of the patent: **14.06.2017**
(21) Application number: 11753032.9
(22) Date of filing: 07.03.2011
(51) Int. Cl.: H01M 8/02, C03C 25/10, D06M 15/233, D06M 15/256, D06M 101/00, H01G 9/02, C08J 5/22, H01M 8/1018, H01M 8/1023, H01M 8/106, H01M 8/1044, H01M 8/1067

(54) **REINFORCING SHEET FOR SOLID ELECTROLYTE MEMBRANE**
VERSTÄRKUNGSFOLIE FÜR EINE FESTSTOFFELEKTROLYTMEMBRAN
FEUILLE DE RENFORCEMENT POUR MEMBRANE D'ÉLECTROLYTE SOLIDE

(30) Priority: 08.03.2010 JP 2010050019
(43) Date of publication of application: 16.01.2013
(73) Proprietor: Nippon Sheet Glass Company, Limited, Tokyo 108-6321 (JP)
(72) Inventor: ONISHI, Masaki, Tokyo 108-6321 (JP); KEZUKA, Masamichi, Tokyo 108-6321 (JP); SAKAGUCHI, Shuhei, Tokyo 108-6321 (JP)
(74) Representative: Intès, Didier Gérard André
(86) International application number: PCT/JP2011/001337
(87) International publication number: WO 2011/111367

(56) References cited:
- WO-A1-00/24075
- WO-A1-2005/101428
- WO-A1-2006/057239
- JP-A- 2002 083 612
- JP-A- 2003 192 464
- JP-A- 2006 286 631
- JP-A- 2009 064 777
- JP-A- 2009 181 788

## Description

### TECHNICAL FIELD

The present invention relates to a sheet material (reinforcing sheet) for reinforcing a solid electrolyte membrane used in a polymer electrolyte fuel cell or the like.

### BACKGROUND ART

Proton-conducting organic polymer membranes (solid electrolyte membranes) are used as solid electrolytes for polymer electrolyte fuel cells (PEFC). Currently, as proton-conducting organic polymers, fluoropolymer materials (for example, "NATION" (registered trademark), DuPont USA) including an perfluoroalkylene main chain and side chains having a structure of polymerized perfluorovinyl ethers and terminated with ion exchange groups (for example, sulfonic acid groups or carboxylic acid groups) are mainly used.

The operation of polymer electrolyte fuel cells using solid electrolyte membranes made of fluoropolymer materials is restricted by the temperatures that the fluoropolymer materials can withstand, and they are usually operated within a relatively low temperature range of 70 to 90°C. However, it is desirable to operate polymer electrolyte fuel cells at higher temperatures to reduce the carbon monoxide poisoning of noble metal catalysts and to increase the total power generation efficiency by utilizing waste heat. For these purposes, solid electrolyte membranes using, as proton-conducting organic polymers, heat-resistant aromatic polymer materials, for example, polybenzimidazole, polyethersulfone and polyetheretherketone, are proposed.

However, the strength of the solid electrolyte membranes made of these aromatic polymer materials is not sufficient, which may cause damage of the solid electrolyte membranes when membrane-electrode assemblies are formed. In addition, the solid electrolyte membranes made of fluoropolymer materials swell on exposure to water, and this swelling may cause an increase in the membrane dimensions, a decrease in the membrane strength, and further occurrence of creep during prolonged operation. Under these circumstances, solid electrolyte membranes are required to increase their strength and dimensional stability.

In order to obtain a solid electrolyte membrane having excellent strength and dimensional stability, it has been proposed to reinforce the solid electrolyte membrane using a reinforcing sheet made of an organic or inorganic fiber woven fabric or the like (for example, Patent Literatures 1 and 2). Patent Literature 1 mentions, as such reinforcing fibers, polymeric material fibers (such as acrylic, polyester, polypropylene and fluororesin), natural material fibers (such as silk, cotton and paper), glass fibers and fabrics thereof, etc. Patent Literature 1 describes that it is preferable to use, among these, glass fibers and fabrics of glass fibers because they have excellent strength and compatibility with materials constituting solid electrolyte membranes.

The present applicant has proposed a reinforcing material (reinforcing sheet) made of a shaped body such as a woven or nonwoven fabric of glass fibers (glass fiber shaped body) impregnated with an inorganic or organic binder, and a solid electrolyte membrane using this reinforcing material (Patent Literatures 3 and 4).

The present applicant has also proposed a proton-conducting solid electrolyte membrane produced from a solution in which NAFION serving as a solid electrolyte and short glass fibers are dispersed (Patent Literature 5).

Patent Literature 6 discloses, as reinforcing sheets, solidified nonwoven fabrics obtained by bonding fibers with organic binders such as acrylate polymers, SBR/NBR, polyvinyl esters, and polyurethane dispersants. SBR/NBR is a latex mixture of SBR (styrene-butadiene rubber) having excellent strength, etc. and NBR (acrylonitrile-butadiene rubber) having excellent heat resistance, etc.

A glass fiber shaped body coated with an organic binder has significantly increased brittle fracture strength, compared with a glass fiber shaped body coated with no binder and a glass fiber shaped body reinforced only by an inorganic binder.

### CITATION LIST

### Patent Literature

- Patent Literature 1: JP 2001-307545 A
- Patent Literature 2: JP 2007-018995 A
- Patent Literature 3: JP 2004-319421 A
- Patent Literature 4: WHO 2005/086265 A1
- Patent Literature 5: WHO 2006/057239 A1
- Patent Literature 6: JP 2009-545841 T

### SUMMARY OF INVENTION

### Technical Problem

In an environment where fuel cells are used, i.e., an environment characterized by high temperature, low pH, and the presence of active chemical species, the organic polymer constituting the organic binder may be decomposed and further leached, thus preventing the increase in the strength and dimensional stability of the solid electrolyte membrane by the reinforcing sheet or influencing the characteristics of the solid electrolyte membrane. For example, an ester group included in an acrylate polymer (acrylic polymer) is hydrolyzed under acidic conditions in the presence of water, which is a typical environment in a fuel cell. Therefore, an acrylic polymer is not suitable for use as an organic binder for maintaining the strength and dimensional stability of a solid electrolyte membrane for a long period of time, in other words, for increasing the durability of the membrane. In addition, for example, a highly reactive oxygen radical is generated from an epoxy group included in an epoxy polymer, and this oxygen radical reacts with a material constituting a solid electrolyte membrane. Therefore, an epoxy polymer is not suitable for use as an organic binder for maintaining the characteristics of the solid electrolyte membrane for a long period of time, in other words, for eliminating the influence on the chemical stability of the membrane.

That is, a problem to be solved by the present invention is that an organic binder contained in a reinforcing sheet prevents the increase in the durability of a solid electrolyte membrane by the reinforcing sheet or reduces the chemical stability of the solid electrolyte membrane. This problem does not draw much attention currently, but will become apparent if the characteristics of fuel cells are further improved and, for example, they are used at higher temperatures. It is an object of the present invention to provide a reinforcing sheet suitable for improving the durability of a solid electrolyte membrane and maintaining the chemical stability thereof.

### Solution to Problem

The present invention provides a reinforcing sheet for a solid electrolyte membrane. This reinforcing sheet comprises: glass fibers; and an organic binder that coats the glass fibers, wherein the reinforcing sheet has voids fillable with a solid electrolyte, and the organic binder is an organic polymer consisting only of carbon and hydrogen.

### Advantageous Effects of Invention

When the reinforcing sheet of the present invention is used for reinforcing a proton-conducting solid electrolyte membrane, the organic binder contained in the reinforcing sheet is less likely to prevent the increase in the strength and dimensional stability of the solid electrolyte membrane by the reinforcing sheet and also less likely to influence the chemical stability of the solid electrolyte constituting the membrane. Therefore, the present invention can provide a reinforcing sheet suitable for improving the durability of the solid electrolyte membrane and maintaining the chemical stability thereof.

### DESCRIPTION OF EMBODIMENTS

The reinforcing sheet according to the present invention includes glass fibers and an organic binder that coats the glass fibers, and has voids to be filled with a solid electrolyte.

The type of glass constituting the glass fibers is not particularly limited as long as it is suitable for increasing the strength of the solid electrolyte membrane. A preferred type of glass is, for example, a silicate glass containing alkali components. The alkali-containing silicate glass has excellent chemical stability, and can be suitably applied to a production method for producing glass fibers by extruding molten glass through fine holes, followed by solidification. When the solid electrolyte membrane is placed in a fuel cell, the environment inside and around the solid electrolyte membrane is acidic. Therefore, as a glass constituting the glass fibers, an alkali-containing silicate glass, typically C-glass, having a composition in which alkali components are less leached in an acidic environment, is more preferred.

The fiber diameter of the glass fibers is preferably 0.1 µm to 20 µm, and more preferably 0.3 µm to 8 µm, to increase the strength, etc. It is preferred that the fiber diameters of the glass fibers be less varied from the viewpoint of the dispersibility of the glass fibers. However, the strength of the reinforcing sheet can be increased by mixing two or more types of glass fiber having different fiber diameters.

In the reinforcing sheet of the present invention, it is preferred that the glass fibers be in the form of a glass fiber shaped body to increase the strength of the solid electrolyte membrane. As stated herein, a glass fiber shaped body refers to an integrated assembly of glass fibers having a fixed shape. The glass fiber shaped body is typically a woven fabric (glass fiber woven fabric) or a nonwoven fabric (glass fiber nonwoven fabric). The glass fiber shaped body is distinguished from an aggregate of glass fibers that are bonded together in the presence of an organic binder between the dispersed glass fibers, in that the glass fiber shaped body maintains the integrity of the glass fibers even if the organic binder that coats them is removed.

When the glass fiber shaped body is a glass fiber woven fabric, the strength of the reinforcing sheet is particularly increased. On the other hand, a glass fiber nonwoven fabric is suitable to reduce the thickness of the reinforcing sheet. This is because a glass fiber nonwoven fabric can be formed from glass fibers with smaller fiber diameters. Therefore, the use of a glass fiber nonwoven fabric is particularly suitable for the preparation of a reinforcing sheet for use in a compact fuel cell. In a preferred embodiment of the present invention, glass fibers are in the form of a nonwoven fabric.

The glass fiber shaped body has voids therein, and the organic binder is present in some of the voids. The other voids are to be filled with the solid electrolyte. The density of the glass fiber shaped body is preferably 0.1 g/cm³ to 0.4 g/cm³ to increase the strength.

The thickness of the glass fiber shaped body (in particular, a glass fiber nonwoven fabric) is preferably 100 µm or less, and particularly preferably 50 µm or less, to ensure the functions of the solid electrolyte membrane. The thickness of the glass fiber shaped body is preferably 5 µm or more to ensure the strength of the reinforcing sheet.

The area density (mass per unit area) of the glass fiber shaped body (in particular, a glass fiber nonwoven fabric) is preferably 2 g/m² to 50 g/m². When the area density is too low, the glass fibers are less entangled, which reduces the effect of increasing the strength by the reinforcing sheet. On the other hand, when the area density is too high, the resulting glass fiber shaped body is too thick to be used as a reinforcing sheet for the solid electrolyte membrane. It should be noted that if the too-thick glass fiber shaped body is pressed to reduce the thickness, the glass fibers are broken at the contact points with the adjacent glass fibers, which reduces the tensile strength of the resulting reinforcing sheet. The area density of the glass fiber shaped body is more suitably 3 g/m² to 25 g/m².

The porosity of the reinforcing sheet, that is, the ratio of voids to the apparent volume of the reinforcing sheet, is preferably 60 to 98% by volume. When the porosity is excessively high, the strength decreases significantly. In addition, the rigidity also decreases significantly, which makes the sheet less resistant to deformation caused by the contraction of the solid electrolyte membrane. On the other hand, when the porosity is too low, the proton conductivity of the solid electrolyte membrane decreases. The porosity is more preferably 80 to 98% by volume, further preferably 85 to 98% by volume, and particularly preferably 90 to 95% bv volume.

The value of the porosity of the reinforcing sheet can be calculated from the nominal thickness of the reinforcing sheet (more precisely, a value obtained by measurement with a dial gauge under a pressure of 20 kPa), the mass per unit area of the reinforcing sheet, the true densities of the glass fibers and the organic binder (the true density means a density inherent to a material without voids; the true density of the glass fibers is about 2.5 g/cm³), and the mass ratio of the organic binder to the glass fibers.

An example of the preparation of a glass fiber nonwoven fabric suitable as a glass fiber shaped body is shown. When 60% by mass of glass fibers with an average diameter of 0.6 µm and an average length of 3 mm and 40% by mass of glass fibers with an average diameter of 5 µm and an average length of about 6 mm are mixed together and the resulting mixture is subjected to a wet forming process without mechanical compression, a glass fiber nonwoven fabric with a thickness of 30 µm and a porosity of about 95% by volume is obtained. This glass fiber nonwoven fabric is coated with an appropriate amount of an organic binder, and thereby a reinforcing sheet having a porosity in the above preferred range can be obtained.

As the organic binder, organic polymers consisting only of carbon, hydrogen are applied.

Specific examples of the organic polymer consisting only of carbon and hydrogen include: (i-1) aliphatic hydrocarbon polymers having no double bond in a molecule, such as polyethylene (PE), polypropylene (PP), and polymethylpentene (PMP); (i-2) aromatic hydrocarbon polymers having no double bond in a molecule, such as polystyrene (PS); (i-3) aliphatic hydrocarbon polymers having a double bond in a molecule, such as polybutadiene, ethylene -propylene-diene copolymer (EPDM), and isobutene-isoprene copolymer (IIR); and (i-4) aromatic hydrocarbon polymers having a double bond in a molecule, such as styrene -butadiene copolymer (SBR). Among these, hydrocarbon polymers having a double bond in a molecule are preferred because they are resistant to degradation.

Examples of the organic polymer consisting only of carbon and fluorine are not according to the invention and include polytetrafluoroethylene (PTFE). Examples of the organic polymer consisting only of carbon, hydrogen and fluorine include ethylene-tetrafluoroethylene copolymer (ETFE) and polyfluorovinylidene (PVEF).

The organic polymers according to the invention contain no element other than carbon, hydrogen. In particular, they contain neither oxygen nor nitrogen. That is, they contain no highly reactive functional group such as typically an ester group or an epoxy group. In addition, the organic polymers contain no functional group such as an amide group or a nitrile group (cyano group), which may decompose in an environment where fuel cells are used.

A typical example of the organic polymer (ii) not according to the invention is DuPont's NAFION. However, the organic polymers belonging to (ii) are not limited to this product. The organic polymers belonging to (ii) have perfluoroalkylene as a main chain, and thus have high chemical stability and heat resistance. As is well known, a sulfonic acid group and/or a calboxylic acid group at the end of the side chain is a functional group that acts stably as an ion exchange group even in the environment where fuel cells are used, and the presence of this functional group does not deteriorate the characteristics of the solid electrolyte membrane.

It is preferred that a portion of the side chain of the organic polymer belonging to (ii) other than the above ion exchange groups contain no element other than carbon, hydrogen, and fluorine. However, there is no problem even if the side chain of the organic polymer contains an oxygen atom that forms an ether bond, as in the side chain of NAFION, which is actually used in a fuel cell. The ether bond is less reactive than an ester bond, etc.

The molecular weight, degree of polymerization, etc. of the organic polymer may be determined as appropriate depending on the type of the selected organic polymer. It is preferable to determine them by conducting experiments, if necessary.

The reinforcing sheet may contain an inorganic binder in an amount small enough not to impair the characteristics of the solid electrolyte membrane, in addition to the organic binder. As an inorganic binder, an inorganic material having acid resistance and heat resistance, for example, silica (silicon dioxide) can be used. The amount of the inorganic binder added is preferably 0.5 to 10% by mass of the glass fibers. The reinforcing sheet containing the inorganic binder in an amount in this range can further increase the strength of the solid electrolyte membrane without significantly decreasing the proton conductivity of the membrane.

As an example of the method of coating the glass fibers with the organic binder, a method of applying a solution or a dispersion containing the organic binder to the glass fiber shaped body or impregnating the glass fiber shaped body with the solution or the dispersion can be mentioned. Specifically, spraying or dipping can be used. When a glass fiber nonwoven fabric should be coated with the organic binder, a method of adding the organic binder to a solvent may be used, as in the glass fiber nonwoven fabric forming process. The type, mixing ratio, molecular weight, degree of polymerization, etc. of the organic polymer constituting the organic binder may be determined as appropriate depending on the dimensions and shape of the glass fiber shaped body. The same applies when an inorganic binder is added.

The binder may be added in the form of a fibrous binder. The strength of the reinforcing sheet can be increased by adding the fibrous binder. As the fibrous binder, for example, fluororesin fibers are suitable. The amount of the fibrous binder added is preferably 1 to 40% by mass of the glass fibers. When the amount added is too small, the effect of increasing the strength by the binder is reduced. When the amount added is too large, the dispersion of the glass fibers may become insufficient, or a coating film formed by the fibrous binder may make it difficult for the solid electrolyte to fill the voids between the glass fibers.

The difference between the thermal expansion coefficient of the organic binder and that of the glass fibers may cause local separation of the organic binder. Treatment with a silane coupling agent is effective in inhibiting this separation. Specifically, the glass fibers may be surface-treated with a silane coupling agent before they are coated with the organic binder. When the glass fibers that have already been surface-treated with a silane coupling agent are coated with the organic binder, the adhesion between the glass fibers and the organic binder is increased, and thus the separation of the organic binder can be inhibited. The treatment with a silane coupling agent is preferred to enhance the effect of reinforcing the glass fiber shaped body by the organic binder.

When the treatment with a silane coupling agent is performed, the amount of the silane coupling agent that coats the glass fibers is preferably in the range of 0.5 mg to 200 mg per 1 m² of the surface area of the glass fibers. When the amount is too small, the silane coupling agent cannot cover the surface of the glass fibers sufficiently, which reduces the effect of increasing the adhesion. When the amount is too large, a layer consisting only of silane is easily formed between the glass fibers and the organic binder. When the layer consisting only of silane is formed, the destruction occurs in this layer, and thus the effect of increasing the adhesion between the glass fibers and the organic binder is reduced.

The silane coupling agent is not particularly limited, but aminosilane can be mentioned, for example.

Hereinafter, the present invention will be described in more detail with reference to examples. The present invention is not limited to the invention described in the examples.

### (Example 1)

First, a glass fiber shaped body and a liquid organic binder material were prepared. As the glass fiber shaped body, "TGP-005F" manufactured by Nippon Sheet Glass Co., Ltd. was used. This glass fiber shaped body is a glass fiber nonwoven fabric obtained by the fabric forming process using glass fibers (C-glass) with an average fiber diameter of 0.6 µm and glass fibers (C-glass) with an average fiber diameter of 4.0 µm. The nominal thickness of this glass fiber nonwoven fabric is 50 µm, and the apparent density thereof is about 0.2 g/cm³. The porosity calculated from the density of the glass fibers and the apparent density of the glass fiber nonwoven fabric is 91% by volume. This glass fiber nonwoven fabric was cut into square pieces of about 100 mm × 100 mm for use.

As the organic binder, a styrene-butadiene copolymer (SBR) "AL-2001" (total solid content of 48%) manufactured by Nippon A & L Inc. was used. This binder was diluted and used as a liquid organic binder material. "AL-2001" is uncrosslinked SBR.

Next, the glass fiber nonwoven fabric was immersed in the liquid organic binder material and then withdrawn (dipping), and dried at 80°C for 60 minutes. The glass fiber nonwoven fabric was coated with the organic binder in this manner to obtain a reinforcing sheet. Reinforcing sheets were obtained by varying the concentration (mass %) of SBR in the liquid organic binder material as shown in Table 1, and each of the reinforcing sheets was subjected to the following tests.

A specimen obtained by cutting the reinforcing sheet was used to measure the breaking strength per 25 mm width. The mass of the reinforcing sheet and the mass of the glass fiber nonwoven fabric before being immersed in the liquid organic binder material were measured with an electronic balance to obtain the difference between them, and the mass of the organic binder that coated the reinforcing sheet was calculated from this difference. Furthermore, the outer dimensions of the reinforcing sheet were measured with a micrometer to calculate the apparent density of the reinforcing sheet. The porosity of the reinforcing sheet was calculated based on the mass and apparent density of the reinforcing sheet, the mass of the glass fiber nonwoven fabric, the true density of the glass fibers, and the amount of the organic binder that coated (the glass fibers) and density (true density) of the organic binder. The results are shown in Table 1 .

**[Table 1]**

| Concentration of liquid organic binder material (mass %) | Amount of organic binder that coated glass fibers (mass %) | Tensile strength (N/25 mm) | Porosity (volume %) |
|---|---|---|---|
| 0.0 | 0.0 | 5.0 | 91.0 |
| 0.01 | 0.1 | 5.2 | 91.0 |
| 0.1 | 0.7 | 6.0 | 90.8 |
| 0.5 | 7.1 | 9.0 | 89.9 |
| 0.8 | 8.1 | 10.8 | 89.6 |
| 1.0 | 9.0 | 11.0 | 88.7 |
| 3.0 | 31.0 | 12.3 | 83.1 |
| 5.0 | 51.0 | 12.9 | 78.1 |

Table 1 shows that the strength of the reinforcing sheet increases as the concentration of the liquid organic binder material increases (as the amount of the organic binder that coats the glass fibers increases). Given that the reinforcing sheet is filled with a solid electrolyte, it is preferred that the reinforcing sheet have a certain level of porosity (for example, 80% by volume or more, preferably 85% by volume or more). In view of these, the concentration of the liquid organic binder material is preferably 0.01 to 5% by mass, and more preferably 0.1 to 1% by mass. It was confirmed that the strength of the reinforcing sheet was increased when the amount of the organic binder that coated the glass fibers was in the range of 0.1 to 51% by mass of the glass fibers, but more preferably, the amount of the organic binder is 0.7 to 9% by mass of the glass fibers. In order to achieve a good balance between the porosity and the strength, a reinforcing sheet having a porosity of 85% by volume or more, in which the amount of the organic binder is 0.7% by mass or more of the glass fibers, is particularly suitable.

### (Example 2)

A reinforcing sheet was prepared in the same manner as in Example 1 except that a solid polymer electrolyte NAFION (not according to the invention) was used as an organic binder, and the sheet was evaluated. In Example 2, which is not according to the invention, another reinforcing sheet was prepared by surface-treating glass fibers with aminosilane (surface-treating them with a silane coupling agent) before dipping a glass fiber shaped body. The treatment with a silane coupling agent was performed specifically by applying aminosilane to the surface of the glass fibers. The results are shown in Table 2.

**[Table 2]**

| Concentration of liquid organic binder material (mass %) | Amount of organic binder that coated glass fibers (mass %) | Tensile strength (N/25 mm) | Porosity (volume %) |
|---|---|---|---|
| 0.0 | 0.0 | 5.0 | 91.0 |
| 1.0 (without treatment) | 11.0 | 7.7 | 88.6 |
| 1.0 (with treatment) | 12.0 | 8.8 | 88.5 |

| | | | |
|---|---|---|---|
| * Treatment = Treatment with a silane coupling agent | | | |

Table 2 shows that the strength of the reinforcing sheet was increased by the treatment with a silane coupling agent.

### INDUSTRIAL APPLICABILITY

The reinforcing sheet of the present invention is useful in increasing the strength of a solid electrolyte membrane for a fuel cell. The reinforcing sheet of the present invention is also useful as a reinforcing material for increasing the strength of separators for various primary or secondary batteries, condensers and the like, and collectors for them.

## Claims

1. A reinforcing sheet for a solid electrolyte membrane, **characterized in that** it comprises: glass fibers; and an organic binder that coats the glass fibers, wherein
the reinforcing sheet has voids fillable with a solid electrolyte, and
the organic binder is an organic polymer consisting only of carbon and hydrogen.

2. The reinforcing sheet according to claim 1, wherein the organic polymer is a hydrocarbon polymer having a double bond in a molecule.

3. The reinforcing sheet according to any one of claims 1 to 2, wherein the glass fibers to be coated with the organic binder are surface-treated with a silane coupling agent.

4. The reinforcing sheet according to any one of claims 1 to 3, wherein the glass fibers are in the form of a nonwoven fabric.

5. The reinforcing sheet according to any one of claims 1 to 4, wherein the reinforcing sheet has a porosity of 60 to 98% by volume.

6. The reinforcing sheet according to claim 5, wherein
the reinforcing sheet has a porosity of 85% by volume or more, and
an amount of the organic binder that coats the glass fibers is 0.7% by mass or more of the glass fibers.

## Patentansprüche

1. Verstärkungsbogen für eine Festelektrolytmembran, **dadurch gekennzeichnet, dass** er Glasfasern und ein organisches Bindemittel umfasst, das die Glasfasern beschichtet, wobei
der Verstärkungsbogen Hohlräume aufweist, die mit einem Festelektrolyten auffüllbar sind, und
das organische Bindemittel ein organisches Polymer ist, das nur aus Kohlenstoff und Wasserstoff besteht.

2. Verstärkungsbogen nach Anspruch 1, wobei das organische Polymer ein Kohlenwasserstoffpolymer mit einer Doppelbindung in einem Molekül ist.

3. Verstärkungsbogen nach einem der Ansprüche 1 bis 2, wobei die mit dem organischen Bindemittel zu beschichtenden Glasfasern mit einem Silankopplungsmittel oberflächenbehandelt sind.

4. Verstärkungsbogen nach einem der Ansprüche 1 bis 3, wobei die Glasfasern in der Form eines Vliesstoffes vorliegen.

5. Verstärkungsbogen nach einem der Ansprüche 1 bis 4, wobei der Verstärkungsbogen eine Porosität von 60 bis 98 Volumen-% aufweist.

6. Verstärkungsbogen nach Anspruch 5, wobei
der Verstärkungsbogen eine Porosität von 85 Volumen-% oder mehr aufweist und
ein Gehalt des organischen Bindemittels, das die Glasfasern beschichtet, 0,7 Massen-% oder mehr der Glasfasern beträgt.

## Revendications

1. Feuille de renforcement pour une membrane d'électrolyte solide, **caractérisée en ce qu'**elle comprend : des fibres de verre ; et un liant organique qui enrobe les fibres de verre, dans laquelle
la feuille de renforcement comprend des vides remplissables avec un électrolyte solide, et
le liant organique est un polymère organique constitué uniquement par du carbone et de l'hydrogène.

2. Feuille de renforcement selon la revendication 1, dans laquelle le polymère organique est un polymère hydrocarboné ayant une liaison double dans une molécule.

3. Feuille de renforcement selon l'une quelconque des revendications 1 à 2, dans laquelle les fibres de verre à enrober avec le liant organique sont traitées en surface avec un agent de couplage à base de silane.

4. Feuille de renforcement selon l'une quelconque des revendications 1 à 3, dans laquelle les fibres de verre sont sous la forme d'un tissu non tissé.

5. Feuille de renforcement selon l'une quelconque des revendications 1 à 4, dans laquelle la feuille de renforcement a une porosité de 60 à 98 % en volume.

6. Feuille de renforcement selon la revendication 5, dans laquelle la feuille de renforcement a une porosité supérieure ou égale à 85 % en volume, et
une quantité du liant organique qui enrobe les fibres de verre est supérieure ou égale à 0,7 % en masse des fibres de verre.
